Europäisches Patentamt

European Patent Office

Office européen des brevets

(19)

(11) EP 0 933 958 A1

(12) **DEMANDE DE BREVET EUROPEEN**

(43) Date de publication:
04.08.1999 Bulletin 1999/31

(51) Int Cl.⁶: **H04Q 7/38**

(21) Numéro de dépôt: **98402748.2**

(22) Date de dépôt: **05.11.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **27.11.1997 FR 9714906**

(71) Demandeur: **ALCATEL**
**75008 Paris (FR)**

(72) Inventeur: **Chiodini, Alain**
**Mountain View, CA 94040 (US)**

(74) Mandataire: **Feray, Valérie**
**COMPAGNIE FINANCIERE ALCATEL**
**Dépt. Propriété Industrielle,**
**30, avenue Kléber**
**75116 Paris (FR)**

(54) **Procédé de localisation spatiale d'une station mobile dans une cellule d'un réseau de communication, station de base, station mobile et paquet de signalisation correspondants**

(57) L'invention concerne un procédé de localisation spatiale d'une station mobile dans une cellule d'un réseau de radiocommunication, ladite cellule étant du type contrôlée par une station de base à antenne omnidirectionnelle, procédé dans lequel ladite cellule est découpée (111) en une pluralité de secteurs angulaires (22 à 27) centrés sur la station de base, un élément de signal de localisation distinct étant affecté (112) à chacun desdits secteurs angulaires ; ladite station mobile émet (113) un paquet de signalisation portant l'ensemble desdits éléments de signal de localisation ; ladite station de base comprend :

- pour chacun desdits secteurs angulaires, un moyen de modification (121) du paquet de signalisation émis par la station mobile, avant sa réception (122) par ladite antenne omnidirectionnelle, ladite modification étant propre audit secteur angulaire;
- des moyens de détermination (123), à partir du paquet de signalisation reçu par ladite antenne omnidirectionnelle, de la modification apportée par l'un desdits moyens de modification, de façon à en déduire le secteur angulaire dans lequel se trouve ladite station mobile.

L'invention concerne également une station de base à antenne omnidirectionnelle, une station mobile et un paquet de signalisation correspondants.

Fig. 1

EP 0 933 958 A1

## Description

Le domaine de l'invention est celui de la radiocommunication avec des mobiles, dans un réseau cellulaire. Plus précisément, l'invention concerne la localisation spatiale d'une station mobile dans une cellule d'un réseau de communication avec une précision relativement bonne, et en particulier suffisante pour des systèmes à accès multiple à répartition dans l'espace (AMRE, ou SDMA pour "Space Division Multiple Access" en langue anglaise).

L'invention s'applique à tout réseau ayant une structure de cellule, et notamment mais non exclusivement à un réseau de type GSM.

Plus précisément, la présente invention concerne un procédé de localisation spatiale d'une station mobile évoluant dans une cellule d'un réseau de communication, ainsi que la station de base à antenne omnidirectionnelle contrôlant la cellule, les stations mobiles du réseau de communication et la signalisation correspondantes.

De façon classique, un réseau de radiocommunication comprend des cellules dans chacune desquelles évoluent une ou plusieurs stations mobiles. Chaque cellule est contrôlée par une station de base. Dans le cas présent, le réseau de radiocommunication est absolument quelconque, notamment en ce qui concerne la forme et le nombre des cellules.

Dans les systèmes AMRE, la cellule est découpée en une pluralité de secteurs angulaires centrés sur la station de base. Cette station de base doit donc être capable de déterminer dans quel secteur angulaire se trouve une station mobile. En effet, une telle localisation permet notamment de choisir un canal de trafic (associé à une fréquence déterminée) à allouer à la station mobile.

Classiquement, on utilise un réseau d'antennes associé à un algorithme spécifique, par exemple de type ESPRIT (pour estimation de paramètres de signaux via des techniques d'invariance rotationnelle, ou "Estimation of Signal Parameters via Rotational Invariance Techniques" en langue anglaise) ou MUSIC (pour classification multiple de signaux, ou "MUltiple SIgnal Classification" en langue anglaise).

Ces procédés connus présentent l'inconvénient d'être complexes, de nécessiter beaucoup de calculs, et d'utiliser plusieurs antennes dans chaque station de base.

Du brevet US 5508707, on connaît un procédé pour déterminer la position géographique des stations mobiles qui émettent un appel urgent. Le procédé divulgué comprend les étapes suivantes :

-    déterminer les contours (en terme de calculs d'erreur minimum et maximum) des différentes zones de couverture des stations de base qui peuvent recevoir l'émission d'un appel d'une station mobile, de manière à définir une première aire frontière qui décrit la position de la station mobile ;
-    déterminer quels lobes (dans le cas d'un système AMRE) ou quels filtres (dans le cas d'un système non AMRE) de différentes stations de base, communiquent avec la station mobile, de manière à déterminer une seconde aire frontière décrivant la position de cette station mobile ;
-    déterminer la zone d'intersection des première et seconde aires frontière, de manière à obtenir une information relativement précise sur la position de la station mobile.

Ainsi, ce procédé nécessite la prise en compte de plusieurs stations de base.

Par ailleurs, ce procédé, de même que ceux décrits plus haut, présente notamment l'inconvénient d'utiliser un réseau d'antennes pour déterminer une position précise de la station mobile, ce qui nécessite un traitement complexe et représente une solution difficile à mettre en oeuvre.

L'invention a notamment pour objectif de pallier ces différents inconvénients de l'état de la technique.

Plus précisément, un premier objectif de l'invention est de fournir un procédé simple de localisation spatiale d'une station mobile évoluant dans une cellule et des moyens associés à ce procédé permettant une réalisation simple et facile à mettre en oeuvre.

Un objectif complémentaire de l'invention est de fournir un tel procédé ne nécessitant qu'une seule antenne omnidirectionnelle dans chaque station de base.

Un autre objectif de l'invention est de fournir un tel procédé permettant d'optimiser l'allocation des ressources de communication.

Ces différents objectifs, ainsi que d'autres qui apparaîtront par la suite, sont atteints selon l'invention à l'aide d'un procédé de localisation spatiale d'une station mobile dans une cellule d'un réseau de radiocommunication, ladite cellule étant du type contrôlée par une station de base à antenne omnidirectionnelle, procédé dans lequel :

-    ladite cellule est découpée en une pluralité de secteurs angulaires centrés sur la station de base, un élément de signal de localisation distinct étant affecté à chacun desdits secteurs angulaires ;
-    ladite station mobile émet un paquet de signalisation portant l'ensemble desdits éléments de signal de localisation ;
-    ladite station de base comprend :

\* pour chacun desdits secteurs angulaires, un moyen de modification du paquet de signalisation émis par la station mobile, avant sa réception par ladite antenne omnidirectionnelle, ladite modification étant propre audit secteur angulaire ;

\* des moyens de détermination, à partir du paquet de signalisation reçu par ladite antenne omnidirectionnelle, de la modification apportée par l'un desdits moyens de modification, de façon à en déduire le secteur angulaire dans lequel se trouve ladite station mobile.

Le principe général de l'invention consiste donc à affecter un élément de signal de localisation distinct à chacun desdits secteurs angulaires d'une cellule AMRE, de manière à pouvoir distinguer ces différents secteurs angulaires.

Ainsi, le secteur angulaire dans lequel la station mobile se trouve est déterminé sans la mise en oeuvre d'un réseau d'antennes, ni de calculs complexes.

On note que l'invention n'impose aucune restriction quant à la nature de l'élément de signal de localisation.

De façon avantageuse, chaque élément de signal de localisation correspond à une fréquence ou une plage de fréquences prédéterminée et chaque moyen de modification assure un filtrage fonction de la fréquence ou de la plage de fréquences prédéterminée affectée au secteur angulaire pour lequel ledit moyen de modification opère.

Selon un mode de réalisation préférentiel de l'invention, ledit paquet de signalisation émis par la station mobile est un signal de référence dont la fréquence instantanée évolue continûment sur une période de temps donnée, de façon à prendre successivement l'ensemble des valeurs de fréquence affectées auxdits secteurs angulaires.

Un tel signal de référence est généralement appelé "chirp" en langue anglaise.

Avantageusement, ledit signal de référence est également utilisé pour la synchronisation entre ladite station de base et ladite station mobile. De cette façon, il n'est pas nécessaire d'ajouter un élément matériel supplémentaire (ou "hardware") à la station mobile. En effet, pour effectuer une fonction supplémentaire, on exploite un signal déjà fourni par la station mobile. Ainsi, la mise en oeuvre de la présente invention présente un coût peu élevé, dans la station de base, et nul dans les stations mobiles. De plus, aucun élément de signalisation supplémentaire n'est émis.

Avantageusement, lesdits éléments de signal de localisation appartiennent au groupe comprenant :

- des fréquences ;
- des plages de fréquences ;
- des combinaisons spécifiques d'au moins deux fréquences ;
- des séquences temporelles de fréquences spécifiques dont la loi de saut de fréquence radio est déterminée.

Il est clair que les moyens de modification et les moyens de détermination de la modification sont adaptés au type d'élément de signal de localisation utilisé.

De préférence, ladite station mobile émet ledit paquet de signalisation lors de l'établissement d'une communication avec ladite station de base et/ou périodiquement.

L'invention concerne également une station de base à antenne omnidirectionnelle contrôlant une cellule d'un réseau de radiocommunication, mettant en oeuvre ce procédé.

Une telle station de base comprend :

- pour chacun desdits secteurs angulaires, un moyen de modification du paquet de signalisation émis par ladite station mobile, avant sa réception par ladite antenne omnidirectionnelle, ladite modification étant propre audit secteur angulaire ;
- des moyens de détermination, à partir du paquet de signalisation reçu par ladite antenne omnidirectionnelle, de la modification apportée par l'un desdits moyens de modification, de façon à en déduire le secteur angulaire dans lequel se trouve ladite station mobile.

En d'autres termes, la station de base est pourvue, pour chacun de ses secteurs angulaires, de moyens aptes à modifier le paquet de signalisation de façon spécifique au secteur concerné. Le paquet de signalisation ainsi modifié est reçu par l'antenne omnidirectionnelle, et d'autres moyens (de détermination) permettent de déterminer la modification apportée et donc de déterminer le secteur angulaire où la station mobile se situe.

Dans un mode de réalisation préférentiel, chaque moyen de modification comprend un moyen de filtrage fonction de la fréquence ou de la plage de fréquences prédéterminée affectée au secteur angulaire pour lequel ledit moyen de modification opère.

Plus généralement, chaque moyen de modification peut comprendre une batterie de portes logiques, un comparateur, un filtre, un détecteur de niveau, une combinaison de ceux-ci ou d'autres ...

Avantageusement, chaque moyen de filtrage est une grille formant un des côtés d'une cage de Faraday, ladite cage de Faraday entourant ladite antenne omnidirectionnelle et présentant autant de côtés qu'il y a de secteurs angulaires, l'espacement entre brins de ladite grille assurant un filtrage passe-haut fonction de la fréquence ou de la plage de fréquences prédéterminée affectée au secteur angulaire pour lequel ledit moyen de modification opère.

Dans un mode de réalisation particulier, lesdits moyens de détermination, à partir du paquet de signalisation reçu par ladite antenne omnidirectionnelle, de la modification apportée au signal émis comprennent :

- autant de moyens de corrélation qu'il y a de secteurs angulaires, chaque moyen de corrélation délivrant une information indiquant la présence ou l'absence d'un desdits éléments de signal de localisation dans ledit paquet de signalisation reçu ;
- des moyens de prise de décision quant au secteur angulaire dans lequel se trouve ladite station mobile en fonction des informations de présence ou d'absence fournies par lesdits moyens de corrélation.

Le moyen de corrélation d'un secteur angulaire donné permet par exemple de détecter la présence ou l'absence dans le paquet de signalisation modifié notamment de l'élément de signal de localisation associé à ce secteur angulaire donné.

L'invention concerne encore une station mobile pour réseau de radiocommunication comprenant au moins une cellule contrôlée par une station de base, et mettant en oeuvre le procédé de l'invention. Une telle station mobile comprend des moyens d'émission, vers ladite station de base, d'un paquet de signalisation portant l'ensemble desdits éléments de signal de localisation.

L'invention concerne en outre le paquet de signalisation en tant que tel, qui est émis par ladite station mobile et comprend l'ensemble desdits éléments de signal de localisation.

Selon un mode de réalisation préférentiel, une fréquence ou plage de fréquences spécifique étant affectée à chacun desdits secteurs angulaires, ce paquet de signalisation comprend un signal dont la fréquence instantanée évolue continûment dans le temps (ou "chirp"), de façon à prendre successivement l'ensemble desdites fréquences spécifiques.

Il peut également s'agir de nombreux autres types de signaux, présentant par exemple l'aspect d'une fonction en escalier, l'essentiel étant que le signal décrive au moins une fois l'ensemble des fréquences spécifiques.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :

- la figure 1 présente un organigramme simplifié d'un mode de réalisation particulier du procédé selon l'invention ;
- la figure 2 présente un schéma d'une cellule sectorisée permettant d'expliciter, à travers un exemple, le fonctionnement d'une station de base mettant en oeuvre le procédé de la figure 1 ;
- la figure 3 présente un mode de réalisation d'un paquet de signalisation selon l'invention ;
- la figure 4 présente un schéma simplifié d'un mode de réalisation particulier de la station de base selon l'invention ;
- la figure 5 présente une vue en perspective d'un mode de réalisation particulier d'un ensemble de moyens de modification d'un paquet de signalisation, compris dans la station de base de la figure 4 ;
- la figure 6 présente un schéma simplifié d'un mode de réalisation particulier des moyens de détermination de la modification apportée, compris dans la station de base de la figure 4.

L'invention concerne donc un procédé de localisation spatiale d'une station mobile évoluant dans une cellule d'un réseau de communication et des moyens de mise en oeuvre de ce procédé.

Ces moyens de mise en oeuvre du procédé sont compris dans la station mobile que l'on cherche à repérer, ainsi que dans chacune des stations de base à antenne omnidirectionnelle contrôlant une cellule distincte du réseau de radiocommunication.

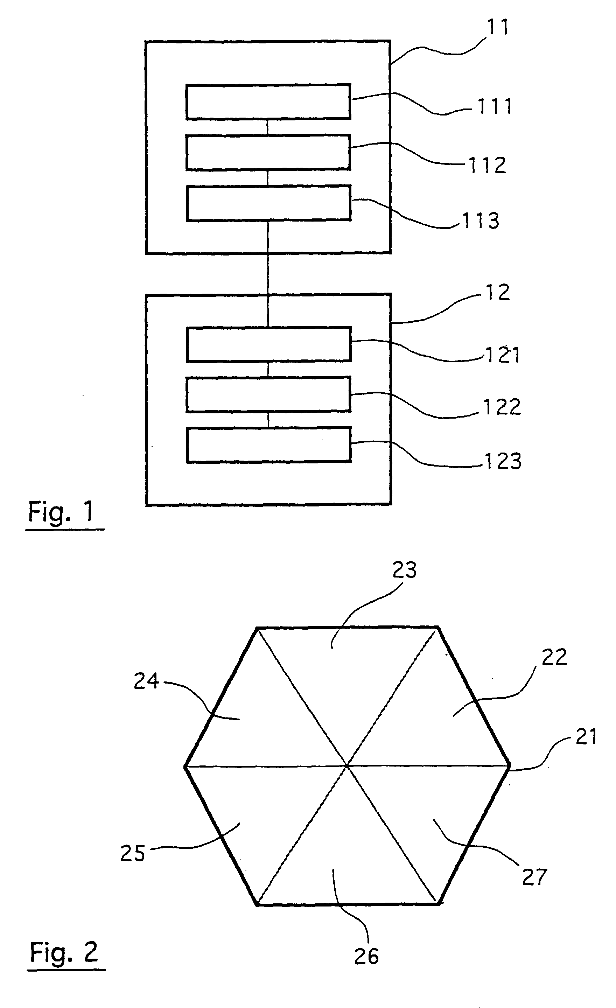

On présente maintenant, en relation avec l'organigramme de la figure 1, un mode de réalisation particulier du procédé selon l'invention de localisation d'une station mobile dans une cellule d'un réseau de radiocommunication, la cellule étant du type contrôlée par une station de base à antenne omnidirectionnelle. Ce procédé comprend les étapes successives suivantes :

- une étape 11 préliminaire d'établissement des bases servant à la localisation de la station mobile, qui se divise en 3 sous-étapes successives, dans lesquelles :

  - on découpe (111) la cellule en une pluralité de secteurs angulaires centrés sur la station de base ;
  - on affecte (112) un élément de signal de localisation distinct à chacun des secteurs angulaires ;
  - la station mobile émet (113) un paquet de signalisation portant l'ensemble des éléments de signal de localisation ;

- une étape 12 de localisation de la station mobile, qui se divise en 3 sous-étapes successives, dans lesquelles :

    - un moyen de la station de base, propre à chaque secteur angulaire, modifie (121) le paquet de signalisation émis par la station mobile. Le paquet de signalisation modifié porte une modification (ou "empreinte") spécifique au secteur angulaire traversé ;
    - l'antenne omnidirectionnelle reçoit (122) le paquet de signalisation modifié ;
    - des moyens de la station de base déterminent (123) la modification apportée au paquet de signalisation émis (c'est-à-dire la modification portée par le paquet de signalisation modifié), de manière à désigner le secteur angulaire où se situe la station mobile.

L'élément de signal de localisation correspond par exemple à une fréquence ou une plage de fréquences prédéterminée.

La station mobile émet par exemple le paquet de signalisation lors de l'établissement d'une communication avec la station de base et/ou périodiquement.

Comme présentée sur le schéma de la figure 2, une cellule 21 comprend par exemple six secteurs angulaires 22 à 27. Ces secteurs angulaires sont par exemple de forme triangulaire, l'un des sommets correspondant par exemple au centre de l'hexagone, point où se trouve la station de base associée.

Afin de faciliter la compréhension, dans la suite de la description, on associe chacun des secteurs angulaires 22 à 27 à une couleur distincte, à savoir rouge, orange, jaune, verte, bleue et violette respectivement.

On comprend que ce code de couleurs est utilisé uniquement dans un but illustratif. Dans la pratique, chaque couleur correspond par exemple à une fréquence ou une plage de fréquences.

En outre, toujours dans un souci de simplification, chacun des secteurs angulaires 22 à 27 est associé à une orientation par rapport au centre de la cellule 21, à savoir nord-est, nord, nord-ouest, sud-ouest, sud et sud-est respectivement.

Il est clair que le découpage peut être plus fin (secteurs angulaires plus étroits), de manière à déterminer une position de la station mobile, de ce fait, plus précise. En d'autres termes, plus le nombre de secteurs est élevé, plus la précision de la position de la station mobile est grande.

Bien évidemment, la forme de la cellule ainsi que celle des secteurs angulaires qui la composent peuvent être quelconques.

Pour initier une communication, la station mobile émet un paquet de signalisation spécifique, par exemple sur le canal d'accès aléatoire (Random Access CHannel en langue anglaise) dans le cadre des systèmes GSM.

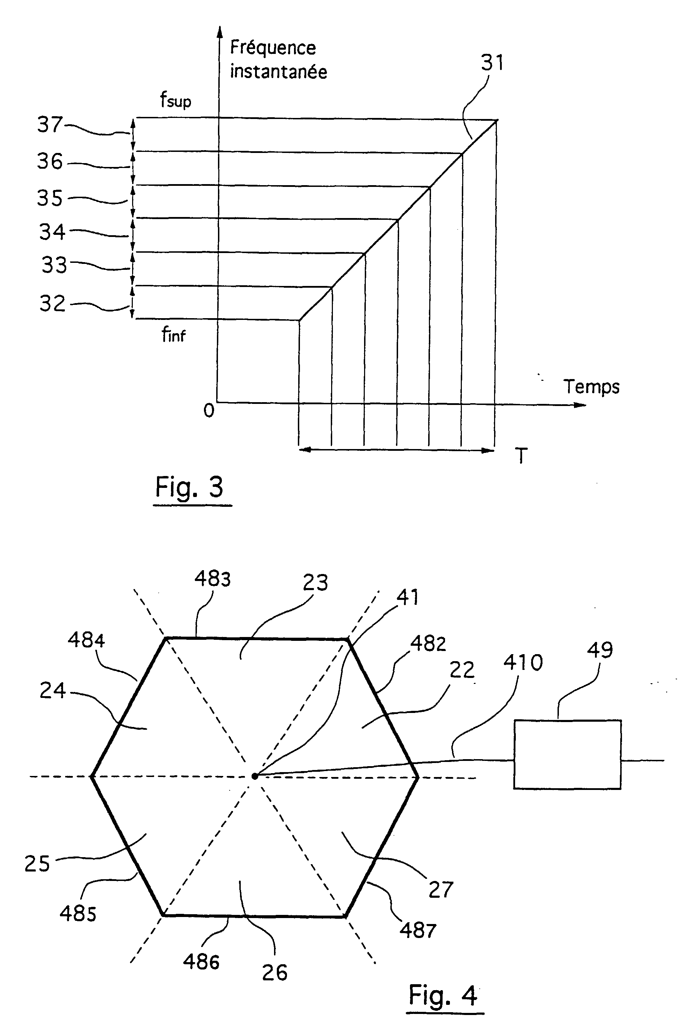

Selon l'invention, on associe à ce paquet, un autre paquet de signalisation qui comprend, par exemple, un signal 31 dont la fréquence instantanée évolue linéairement au cours du temps (chirp en langue anglaise) comme illustré en figure 3. Ce signal chirp est émis pendant un intervalle de temps T.

L'équation de ce signal chirp est donnée par la formule suivante :

$$S_{chirp}(t) = \cos(2.\pi.(f_{sup} - f_{inf}).t^2/T)$$

- $f_{sup}$ étant la fréquence instantanée supérieure émise par le signal chirp ;
- $f_{inf}$ étant la fréquence instantanée inférieure émise par le signal chirp ;
- T étant l'intervalle de temps pendant lequel le signal chirp est émis.

Selon une variante avantageuse, ce même signal chirp peut également être utilisé pour la synchronisation de la station mobile. Le document de brevet FR 2 706 232 prévoit une telle utilisation d'un chirp pour la synchronisation.

Ainsi, en utilisant un seul signal pour deux fonctions (synchronisation et localisation), on obtient les avantages suivants :

- aucun élément matériel (ou hardware) supplémentaire n'est nécessaire ;
- aucun signal supplémentaire n'est nécessaire (ni en émission ni en réception).

Il est à noter que les avantages précités sont vrais, d'une façon générale, pour tout signal qui, comme le signal chirp, peut permettre d'assurer deux fonctions distinctes de synchronisation et de localisation. Il est clair cependant que la synchronisation peut être réalisée par tout autre moyen indépendant du signal chirp.

L'excursion fréquentielle du signal chirp peut être divisée en autant de segments fréquentiels identiques (correspondant chacun à une couleur) que de secteurs angulaires à distinguer dans une cellule. Par conséquent, à chaque segment de chirp peut être associé un secteur angulaire par l'intermédiaire du "code de couleurs" précité.

La forme de la courbe du signal chirp est, bien entendu, non limitée à une droite 31. Cette courbe peut aussi être en forme d'escalier par exemple. D'une façon générale, il faut que ce signal balaie toutes les fréquences de la borne inférieure $f_{inf}$ à la borne supérieure $f_{sup}$ en passant par les différentes plages de fréquences 32 à 37, de façon à décrire l'ensemble des valeurs de fréquence affectées aux différents secteurs angulaires.

Chacune des différentes plages de fréquences 32 à 37 est associée à une couleur, par exemple rouge, orange, jaune, verte, bleue, violette respectivement.

Il est à noter, que, dans notre exemple, le passage d'une plage de fréquences correspondant à une couleur à une plage de fréquences précédente ou suivante correspondant à une couleur différente est continu.

Selon une variante, il peut être discontinu, avec un intervalle (régulier ou irrégulier) entre chaque plage, ou encore, présenter un panachage de passages continus et discontinus entre ces plages.

On présente maintenant, en relation avec la figure 4, un mode de réalisation particulier de la station de base selon l'invention.

Comme présenté sur la figure 4, pour la mise en oeuvre de la présente invention, la station de base comprend par exemple six moyens de modification $48_2$ à $48_7$ (un par secteur angulaire), une antenne réceptrice unique, constituée par exemple par un brin vertical omnidirectionnel 41, et des moyens 49 de détermination du secteur angulaire où se trouve la station mobile.

Un secteur angulaire est associé à un moyen de modification qui lui est propre. Ainsi, la station de base décrite ici à titre d'exemple, comprend six moyens différents de modification, permettant de transformer le paquet de signalisation émis par la station mobile de six manières différentes. Un seul moyen de modification reçoit le paquet de signalisation émis par la station mobile et le transforme de façon à laisser une "trace" spécifique, repérant ainsi le secteur angulaire auquel il est associé.

Chaque moyen de modification assure par exemple un filtrage fonction de la fréquence ou de la plage de fréquences prédéterminée affectée au secteur angulaire pour lequel le moyen de modification opère.

L'antenne omnidirectionnelle reçoit, d'un des secteurs angulaires, le paquet de signalisation préalablement transformé par le moyen de modification associé au secteur angulaire concerné.

Ensuite, le paquet de signalisation transformé alimente des moyens 49 de détermination. Ces moyens 49 vont déterminer, suite à un traitement, quelle modification a subie le paquet de signalisation émis et donc le secteur angulaire d'où est issu le paquet de signalisation émis par la station mobile (c'est-à-dire celui dans lequel se situe la station mobile).

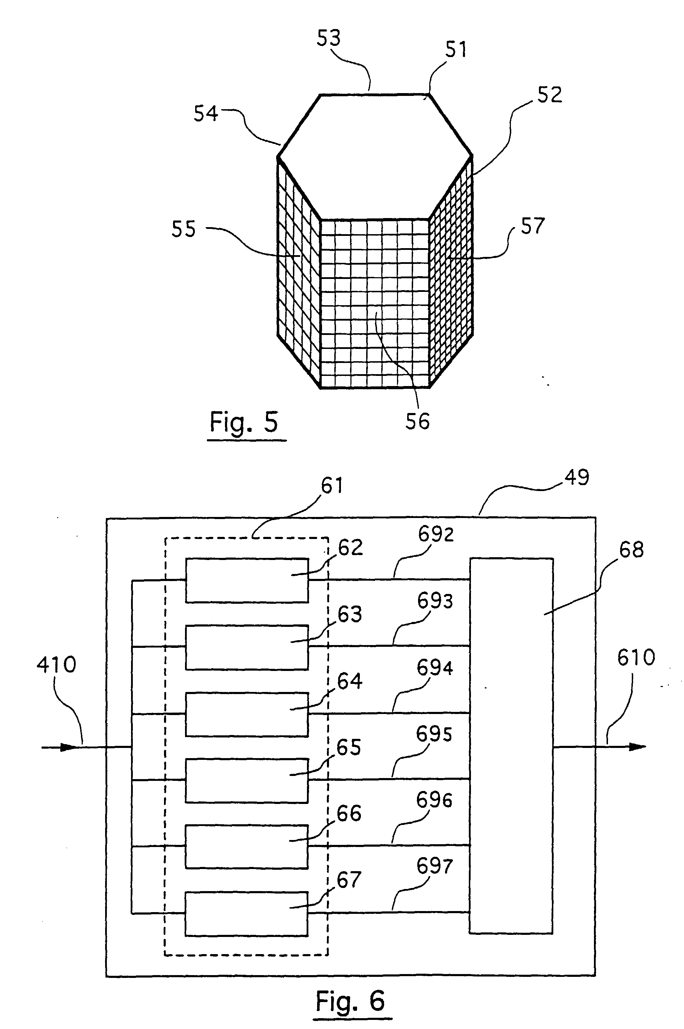

Comme présenté sur la figure 5, dans un mode de réalisation particulier, les moyens 48 sont constitués d'une cage de Faraday 51. Le moyen de filtrage utilisé est alors propre à la structure des pans de la cage de Faraday. En effet, chaque côté de la cage de Faraday est formé d'une grille 52 à 57 dont les mailles ont des dimensions qui sont fonction des fréquences à filtrer (par exemple de dimensions $\lambda/4$). Un telle structure joue alors le rôle d'un filtre passe-haut, à partir de (et y incluse) la fréquence (ou plage de fréquences) associée au secteur angulaire concerné.

Ceci apparaît clairement sur la Table I ci-dessous qui précise, pour chaque secteur, un exemple de filtrage en reprenant le code de couleurs précité. Les dimensions des mailles sont différentes d'un pan à l'autre, ce qui implique un filtrage différent selon le côté de la cage de Faraday traversé par le paquet de signalisation.

En se référant à la table I, si le paquet de signalisation émis traverse par exemple la grille nord-ouest, seules les couleurs jaune, verte, bleue et violette ne sont pas filtrées. En d'autres termes, les couleurs rouge et orange sont filtrées. Par conséquent, s'il passe par la grille nord-ouest, le paquet de signalisation émis est modifié et ne comprend plus que les fréquences ou plages de fréquence correspondant aux couleurs jaune, verte, bleue et violette.

Table I

| | filtrage de la couleur rouge? | filtrage de la couleur orange? | filtrage de la couleur jaune ? | filtrage de la couleur verte? | filtrage de la couleur bleue? | filtrage de la couleur violette? |
|---|---|---|---|---|---|---|
| grille Nord-Est | NON | NON | NON | NON | NON | NON |
| grille Nord | OUI | NON | NON | NON | NON | NON |
| grille Nord-Ouest | OUI | OUI | NON | NON | NON | NON |
| grille Sud-Ouest | OUI | OUI | OUI | NON | NON | NON |
| grille Sud | OUI | OUI | OUI | OUI | NON | NON |
| grille Sud-Est | OUI | OUI | OUI | OUI | OUI | NON |

On présente maintenant, en relation avec la figure 6, un mode de réalisation particulier des moyens 49 de détermination. Ces moyens 49 comprennent un ensemble 61 de corrélateurs 62 à 67 et un centre de décision 68. Le nombre de corrélateurs correspond au nombre de secteurs angulaires. Chaque corrélateur détecte la présence ou l'absence de la couleur associée à un secteur angulaire dans le paquet de signalisation modifié et fournit à un centre de décision 68 un signal $69_2$ à $69_7$ respectivement indiquant le résultat correspondant. Ainsi, les corrélateurs 62 à 67 détectent respectivement la présence ou l'absence de la couleur rouge, orange, jaune, verte, bleue et violette. Dans notre exemple, le centre de décision 68 reçoit donc six signaux. Ensuite, ce centre de décision 68 analyse ces signaux et, selon une grille prédéterminée de réponses illustrée sur la table II suivante, décide du secteur angulaire dans lequel évolue la station mobile.

TABLE II

| signal reçu (paquet de signalisation modifié) | présence de la couleur rouge ? | présence de la couleur orange ? | présence de la couleur jaune? | présence de la couleur verte? | présence de la couleur bleue ? | présence de la couleur violette? | décision quant au secteur angulaire désigné |
|---|---|---|---|---|---|---|---|
| CAS 1 | OUI | OUI | OUI | OUI | OUI | OUI | secteur nord-est |
| CAS 2 | NON | OUI | OUI | OUI | OUI | OUI | secteur nord |
| CAS 3 | NON | NON | OUI | OUI | OUI | OUI | secteur nord-ouest |
| CAS 4 | NON | NON | NON | OUI | OUI | OUI | secteur sud-ouest |
| CAS 5 | NON | NON | NON | NON | OUI | OUI | secteur sud |
| CAS 6 | NON | NON | NON | NON | NON | OUI | secteur sud-est |

La détection des différentes couleurs s'effectue par une opération d'intercorrélation entre le signal reçu, correspondant au paquet de signalisation transformé, avec chacune des couleurs de référence.

Par exemple, si les signaux en sortie des corrélateurs 62 à 67 indiquent au centre de décision 68 l'absence des couleurs rouge et orange et la présence des couleurs jaune, verte, bleue et violette, le centre de décision 68 en déduit qu'il s'agit du cas n°3 de la table II et donc que la station mobile se situe donc dans le secteur nord-ouest. Ce résultat est alors disponible sur le signal 610 délivré en sortie du centre de décision.

La fonction remplie par le centre de décision 68 peut, par exemple, être assurée par un microprocesseur ou un microcontrôleur.

A la lecture de la présente description, on comprend que la présente invention propose un procédé simple, performant et facile à mettre en oeuvre.

**Revendications**

1.   Procédé de localisation spatiale d'une station mobile dans une cellule d'un réseau de radiocommunication, ladite cellule étant du type contrôlée par une station de base à antenne omnidirectionnelle (41), caractérisé en ce que :

-   ladite cellule est découpée (111) en une pluralité de secteurs angulaires (22 à 27) centrés sur la station de base, un élément de signal de localisation distinct étant affecté (112) à chacun desdits secteurs angulaires ;
-   ladite station mobile émet (113) un paquet de signalisation portant l'ensemble desdits éléments de signal de localisation ;
-   ladite station de base comprend :

    *   pour chacun desdits secteurs angulaires, un moyen de modification (121) du paquet de signalisation émis par la station mobile, avant sa réception (122) par ladite antenne omnidirectionnelle, ladite modification étant propre audit secteur angulaire;

    \*   des moyens de détermination (123), à partir du paquet de signalisation reçu par ladite antenne omnidirectionnelle, de la modification apportée par l'un desdits moyens de modification, de façon à en déduire le secteur angulaire dans lequel se trouve ladite station mobile.

**2.** Procédé de localisation spatiale selon la revendication 1, caractérisé en ce que chaque élément de signal de localisation correspond à une fréquence ou une plage de fréquences prédéterminée (32 à 37),
et en ce que chaque moyen de modification assure un filtrage fonction de la fréquence ou de la plage de fréquences prédéterminée affectée au secteur angulaire pour lequel ledit moyen de modification opère.

**3.** Procédé de localisation spatiale selon l'une des revendications 1 ou 2, caractérisé en ce que ledit paquet de signalisation émis par la station mobile est un signal de référence dont la fréquence instantanée évolue continûment sur une période de temps donnée, de façon à prendre successivement l'ensemble des valeurs de fréquence affectées auxdits secteurs angulaires.

**4.** Procédé de localisation spatiale selon la revendication 3, caractérisé en ce que ledit signal de référence est également utilisé pour la synchronisation entre ladite station de base et ladite station mobile.

**5.** Procédé de localisation spatiale selon l'une quelconque des revendications 1 à 4, caractérisé en ce que lesdits éléments de signal de localisation appartiennent au groupe comprenant :

-   des fréquences ;
-   des plages de fréquences (32 à 37) ;
-   des combinaisons spécifiques d'au moins deux fréquences ;
-   des séquences temporelles de fréquences spécifiques.

**6.** Procédé de localisation spatiale selon l'une quelconque des revendications précédentes, caractérisé en ce que ladite station mobile émet ledit paquet de signalisation lors de l'établissement d'une communication avec ladite station de base et/ou périodiquement.

**7.** Station de base à antenne omnidirectionnelle contrôlant une cellule d'un réseau de radiocommunication, ladite cellule étant découpée (111) en une pluralité de secteurs angulaires (22 à 27) centrés sur la station de base, et à chacun desquels est affecté (112) un élément de signal de localisation distinct, une station mobile émettant (113) un paquet de signalisation portant l'ensemble desdits éléments de signal de localisation, caractérisée en ce qu'elle comprend :

-   pour chacun desdits secteurs angulaires, un moyen de modification ($48_2$ à $48_7$) du paquet de signalisation émis par ladite station mobile, avant sa réception par ladite antenne omnidirectionnelle (41), ladite modification étant propre audit secteur angulaire (respectivement 22 à 27) ;
-   des moyens (49) de détermination, à partir du paquet de signalisation reçu par ladite antenne omnidirectionnelle, de la modification apportée par l'un desdits moyens de modification ($48_2$ à $48_7$), de façon à en déduire le secteur angulaire (22 à 27) dans lequel se trouve ladite station mobile.

**8.** Station de base selon la revendication 7, caractérisée en ce que chaque moyen de modification ($48_2$ à $48_7$) comprend un moyen de filtrage fonction de la fréquence ou de la plage de fréquences prédéterminée affectée au secteur angulaire pour lequel ledit moyen de modification opère.

**9.** Station de base selon la revendication 8, caractérisée en ce que chaque moyen de filtrage est une grille (52 à 57) formant un des côtés d'une cage de Faraday (51), ladite cage de Faraday (51) entourant ladite antenne omnidirectionnelle (41) et présentant autant de côtés qu'il y a de secteurs angulaires (22 à 27), l'espacement entre brins de ladite grille assurant un filtrage passe-haut fonction de la fréquence ou de la plage de fréquences prédéterminée (32 à 37) affectée au secteur angulaire pour lequel ledit moyen de modification opère.

**10.** Station de base selon la revendication 7, caractérisée en ce que lesdits moyens 49 de détermination, à partir du paquet de signalisation reçu par ladite antenne omnidirectionnelle, de la modification apportée au signal émis comprennent :

-   autant de moyens (62 à 67) de corrélation qu'il y a de secteurs angulaires (22 à 27), chaque moyen de corrélation délivrant une information (respectivement $69_2$ à $69_7$) indiquant la présence ou l'absence d'un desdits éléments de signal de localisation (32 à 37) dans ledit paquet de signalisation reçu ;
- des moyens (68) de prise de décision quant au secteur angulaire dans lequel se trouve ladite station mobile en fonction des informations ($69_2$ à $69_7$) de présence ou d'absence fournies par lesdits moyens (62 à 67) de corrélation.

11. Station mobile pour réseau de radiocommunication comprenant au moins une cellule contrôlée par une station de base, caractérisée en ce que,
ladite cellule étant découpée (111) en une pluralité de secteurs angulaires (22 à 27) centrés sur ladite station de base, et à chacun desquels est affecté (112) au moins un élément de signal de localisation distinct,
elle comprend des moyens d'émission, vers ladite station de base, d'un paquet de signalisation portant l'ensemble desdits éléments de signal de localisation.

12. Paquet de signalisation pour la localisation spatiale d'une station mobile dans une cellule d'un réseau de radiocommunication contrôlée par une station de base à antenne omnidirectionnelle (41), caractérisé en ce que,
ladite cellule étant découpée (111) en une pluralité de secteurs angulaires (22 à 27) centrés sur ladite station de base, et à chacun desquels est affecté (112) au moins un élément de signal de localisation distinct,
ledit paquet de signalisation est émis par ladite station mobile (113) et comprend l'ensemble desdits éléments de signal de localisation.

13. Paquet de signalisation selon la revendication 12, caractérisé en ce que, une fréquence ou plage de fréquences spécifique étant affectée à chacun desdits secteurs angulaires (22 à 27), ledit paquet de signalisation comprend un signal dont la fréquence instantanée évolue continûment dans le temps (31), de façon à prendre successivement l'ensemble desdites fréquences spécifiques.

Fig. 1

Fig. 2

Fréquence
instantanée

f_sup

37
36
35
34
33
32

f_inf

31

0

Temps

T

Fig. 3

483   23   41
484       482   22   410   49

24

25

485

486   26   27

487

Fig. 4

Fig. 5

Fig. 6

Office européen
des brevets

**RAPPORT DE RECHERCHE EUROPEENNE**

Numéro de la demande

EP 98 40 2748

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | FR 2 706 232 A (ALCATEL MOBILE COMM FRANCE) 16 décembre 1994 <br> * page 16, ligne 1 - page 21, ligne 27 * <br> --- | 1-7, 11-13 | H04Q7/38 |
| A | US 5 543 815 A (WU TE-KAO ET AL) 6 août 1996 <br> * colonne 2, ligne 64 - colonne 5, ligne 32 * <br> --- | 1,2,7-9 | |
| A | US 5 515 378 A (ROY III RICHARD H ET AL) 7 mai 1996 <br> * colonne 12, ligne 20 - colonne 25, ligne 25 * <br> ----- | | |

DOMAINES TECHNIQUES
RECHERCHES (Int.Cl.6)

H04Q
H01Q

Le présent rapport a été établi pour toutes les revendications

| Lieu de la recherche | Date d'achèvement de la recherche | Examinateur |
|---|---|---|
| LA HAYE | 25 février 1999 | Maalismaa, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

EP 0 933 958 A1

## ANNEXE AU RAPPORT DE RECHERCHE EUROPEENNE
## RELATIF A LA DEMANDE DE BREVET EUROPEEN NO.

EP 98 40 2748

25-02-1999

| Document brevet cité au rapport de recherche | | Date de publication | Membre(s) de la famille de brevet(s) | | Date de publication |
|---|---|---|---|---|---|
| FR 2706232 | A | 16-12-1994 | AT | 171023 T | 15-09-1998 |
| | | | AU | 685129 B | 15-01-1998 |
| | | | AU | 6973894 A | 03-01-1995 |
| | | | CN | 1125023 A | 19-06-1996 |
| | | | DE | 69413224 D | 15-10-1998 |
| | | | EP | 0702866 A | 27-03-1996 |
| | | | FI | 955839 A | 31-01-1996 |
| | | | WO | 9429971 A | 22-12-1994 |
| | | | JP | 8511664 T | 03-12-1996 |
| US 5543815 | A | 06-08-1996 | AUCUN | | |
| US 5515378 | A | 07-05-1996 | AU | 670766 B | 01-08-1996 |
| | | | AU | 3145493 A | 19-07-1993 |
| | | | CA | 2125571 A | 24-06-1993 |
| | | | EP | 0616742 A | 28-09-1994 |
| | | | FI | 942771 A | 10-06-1994 |
| | | | JP | 7505017 T | 01-06-1995 |
| | | | WO | 9312590 A | 24-06-1993 |
| | | | WO | 9818272 A | 30-04-1998 |
| | | | US | 5546090 A | 13-08-1996 |
| | | | US | 5625880 A | 29-04-1997 |
| | | | US | 5592490 A | 07-01-1997 |
| | | | US | 5642353 A | 24-06-1997 |
| | | | US | 5828658 A | 27-10-1998 |

EPO FORM P0460